# EUROPEAN PATENT SPECIFICATION

(11) **EP 0 601 239 B1**
(45) Date of publication and mention of the grant of the patent: **19.03.1997**
(21) Application number: 92203834.4
(22) Date of filing: 09.12.1992
(51) Int. Cl.: E02F 3/90, E02F 3/88, F16H 1/00

(54) **Device for driving a tool positioned on a pivotable part**
Gerät zum Antrieb eines an einem schwenkbaren Teil angeordneten Werkzeugs
Dispositif pour l'entraînement d'un outil disposé sur une partie pivotante

(43) Date of publication of application: 15.06.1994
(73) Proprietor: IHC HOLLAND N.V., NL-3361 EP Sliedrecht (NL)
(72) Inventor: Van den Elshout, Johannes, NL-3062 SB Rotterdam (NL)
(74) Representative: Lips, Hendrik Jan George, Ir.

(56) References cited:
- FR-A- 332 307
- FR-A- 363 002
- US-A- 2 507 844
- US-A- 2 902 967
- US-A- 3 051 120
- US-A- 3 094 097
- US-A- 3 362 246

## Description

The invention relates to a device for driving a tool positioned on a pivotable part as this is described in the preamble of the main claim.

Such a device is known by FR-A-332 307 and in particular by the embodiment according to the figures 29-31 of this. In case of this known device the shaft carrying the bevel gear, which is in engagement with a bevel gear connected to the motor drive shaft also serves as the shaft of the pivotable part, which in this case is in the shape of a suction tube. Now big loads are exerted on said pivotable part and so on said shaft. In practice it appears that after some time a certain play can arise in the bearings supporting said shaft. Caused by this no correct engagement will be present any longer between the bevel gears connected to said shaft and to the motor drive shaft, respectively. By this wear of said gear wheels will occur.

Undesirable strains can occur when the axis of the motor drive shaft does no longer cross exactly the axis of the pivot shaft supporting said bevel gear and said pivotable part or is not square thereto.

Further the various gear wheels will be exposed to wear caused by dirt, it being difficult also to take care for sufficient lubrication.

Now the object of the invention is to raise these disadvantages and to that end the features are applied as these are described in the characterizing portion of the main claim.

Further it can be pointed to US-A-3 051 120 showing a drive mechanisme for a propeller with means to connect it to a drive shaft of an inboard motor. The shaft supporting the bevel gear engaging the gear connected to the motor shaft also supports a housing through which a shaft to the propeller runs. So no tool is provided on a pivotable part, in the sense as indicated above.

In a simple way, a gear transmission can be mounted between the transmission shaft and the output shaft, through which, if required, the speeds of the shafts can differ from each other.

The transmission ratio between the motor drive shaft and the output shaft can further also be controlled by adjustment of the bevel gear wheels c.q. crown gear wheels, or by mounting additional wheels in the input or output section of the transmission.

In particular it can be provided for, that the wheel directly driven by the motor drive shaft has been mounted on an input shaft, which is supported by the stationary section of the housing, with an intermediate shaft having been mounted between the input shaft and the motor drive shaft, said intermediate shaft being able to experience an extension and being coupled to both shafts by cardan joints.

Through this, it is achieved that no tension and flexural strains are exerted on the motor drive shaft and the input shaft. These can occur when the one wheel of the bevel gear or crown wheel transmission is mounted directly on the motor drive shaft and a certain play arises in the bearings which support the pivotable part in relation to the pivot shaft. The undesirable strains can also occur when the axis of the motor drive shaft does not cross the axis of the pivot shaft of the pivotable part or is not square thereto.

Thus, by application of the intermediate shaft, deviations in the position of the motor in relation to the pivot shaft of the pivotable part can also be compensated. Then, on mounting the motor, one only has to consider less high requirements of accuracy.

In particular it will be provided for, that the stationary section of the housing will substantially be located within the second section thereof and has been provided with two bearings, the axes of which being in line and coinciding with the axis of the pivot shaft of the pivotable part and with the axes of two bearings accommodated in the second housing section and which bearings serve for supporting the wheel shaft, the stationary housing section, at a distance from the axes of said bearings and outside of the second housing section, having been pivotally connected to at least one arm, which in turn has been pivotally connected to a stationary part.

In this way it is achieved, that the second housing section can only perform a rotating movement in relation to the stationary section, so that the wheels of the bevel gear or crown gear transmission will always take the correct position in relation to each other. Through this, the occurring wear can be limited.

According to a further development of the invention, the wheel shaft in the stationary housing section will be supported in a bush being part of the stationary housing section and which projects outwardly through an elongated slot in the wall of the second housing section and has been connected to the arm extending between the stationary housing section and a stationary part, in which this wall of the second housing section, provided with the slot, has a bent shape, the centre of curvature of which coinciding with the axis of the pivot shaft of the pivotable part.

The invention is further explained by way of an embodiment, illustrated in the drawing, in which:
fig. 1 diagrammatically shows a side view of a device according to the invention, applied on a suction dredger, with its ladder shown in two different positions;
fig. 2 diagrammatically shows a plan view of the device according to fig. 1;
fig. 3 shows a cross-section and partly a view of a part of fig. 1 on an enlarged scale and in particular of the transmission between motor drive shaft and pump shaft with several parts left out; and
fig. 4 shows a cross-section of the transmission, substantially according to the line IV-IV of fig. 3.

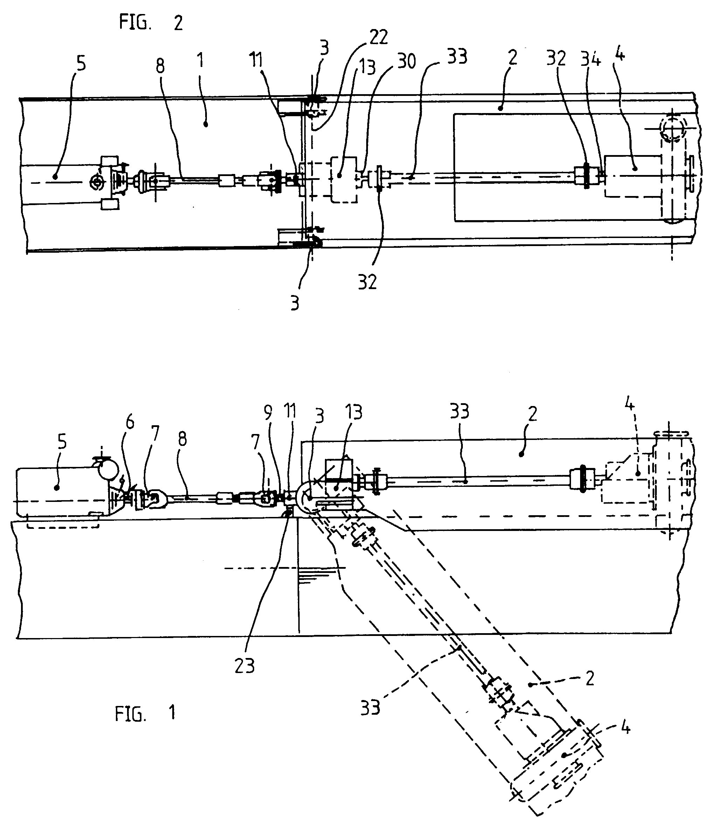

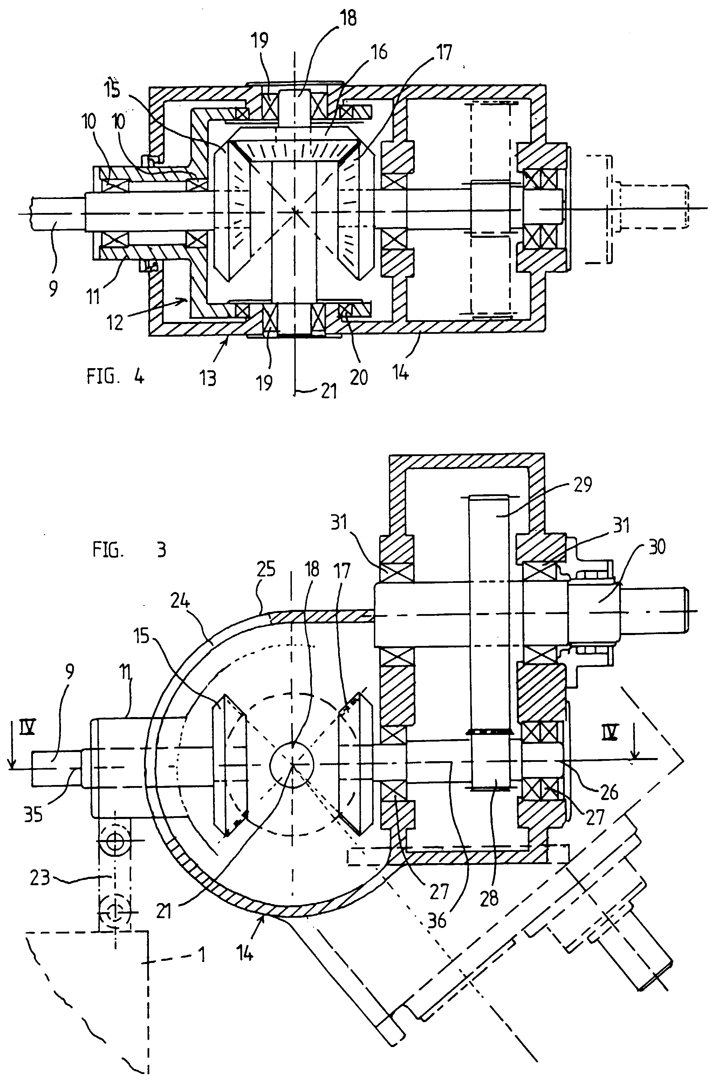

In the figures 1 and 2, 1 indicates a dredger vessel or pontoon, on which the ladder 2 has been pivotably fastened in the pivot points 3.

In figs. 1 and 2 the ladder has been shown with full lines in the horizontal position, in which the dredger is out of operation. In fig. 1, dash lines indicate the position of the ladder when it is in operation.

The pump 4 has been fastened to the ladder 2 and is to be driven by the motor 5. The motor 5 has been arranged stationary on the deck of the vessel 1.

The motor 5 has the motor drive shaft 6, which has been connected to the intermediate shaft 8 by a cardan joint 7. The intermediate shaft 8 can have a telescopic part not further indicated and has its other end connected to the wheel shaft 9 by means of a cardan joint 7.

As appears from fig. 4, the wheel shaft 9 is supported by the bearings 10 in a bush 11, which is part of a stationary section 12 of the housing 13. The housing 13 further comprises the section 14, which in a way yet to be described further is pivotably connected to the housing section 12. The housing section 14 has been coupled to the ladder 2 in a way not further indicated.

At the end opposite the intermediate shaft 8, the wheel shaft 9 has been provided with the bevel gear wheel 15, which is in engagement with a bevel gear wheel 16, which in turn is in engagement with the bevel gear wheel 17. T h e bevel gear wheel 16 has been mounted on the shaft 18, which is supported in the housing section 14 by means of the bearings 19. Concentric to the bearings 19, bearings 20 are present between the housing sections 12 and 14, so that the housing sections 12 and 14 are pivotably connected to each other. The axes 21 of the wheel shaft 18 and of the bearings 19 and 20 coincide with the pivot axis 22 of the ladder 2 and thus with the axes of the pivot points 3.

By one or more pivotally mounted arms 23, the bush 11 of the stationary housing section 12 has further been connected to a part stationary in relation to the motor 5, so to the vessel 1 as well. The bush 11 extends through a slot 24 in the partially cilindrical wall 25 of the housing section 14.

The bevel wheel 17 has been mounted on the transmission shaft 26, which is supported in the housing section 14 by means of the bearings 27. On the shaft 26, a gear wheel 28 is located being in engagement with a gear wheel 29, mounted on the output shaft 30, which is supported in the housing section 14 by means of the bearings 31.

As appears from the figures 3 and 4, all bevel gear wheels 15, 16 and 17 and the gear wheels 28 and 29 are located within the housing 13, so that dirt is prevented from getting between the wheels and the wheels can be lubricated.

By means of a coupling 32 - see fig. 2 - the output shaft 30 has been connected to a drive shaft 33, which in turn has been connected to the shaft 34 of the pump 4 by means of a coupling 32.

By the way of arranging the bevel gear wheels 15, 16 and 17 described above, it is achieved that also on pivoting the ladder 2, the axis 35 of the shaft 9, which carries the bevel gear wheel 15, and the axis 36 of the shaft 26, which carries the bevel gear wheel 17, the axis 21 of the shaft 18 which carries the wheel 16, always cross each other, to wit under a square angle. Through this, said wheels will always be in engagement under optimum conditions.

## Claims

1. Device for driving a tool (4) positioned on a pivotable part such as e.g. the ladder (2) or such like of a dredger vessel, said device comprising: a combustion engine (5) or the like which is stationary arranged on said vessel; an output shaft (30) mounted on the pivotable part (2) for driving said tool (4) and running substantially parallel to the longitudinal axis of said pivotable part (2); coupling means comprising bevel or crown gear transmissions arranged between said engine and said output shaft, the extension of the axis of the motor drive shaft (6) crossing the pivot axis (22) of the pivotable part (2) and being square thereto, **characterized in that** the motor drive shaft (6), by means of bevel or crown gear wheels (15,16,17), is driving a transmission shaft (26) the axis (36) of which is crossing the pivot axis (22) of the pivotable part (2) and is square thereto, said bevel gear wheels (15,16,17) being accomodated in a housing (13) consisting of at least two sections (12,14) being sealed in respect of each other, to wit a first stationary section (12) and a second section (14) which can move along with the pivotable part (2), the shaft (18) of the gear wheel (16) engaging the gear wheels (15,17) mounted on the motor drive shaft (6) and the transission shaft (26) respectively, being in line with the pivot axis (22) of the pivotable part (2) and being supported by the stationary section (12) of said housing (13), the pivotable part (2) being supported by its own pivot points (3) distanced from the housing, said transmission shaft (26) being supported by the second section of said housing (13) for driving the output shaft (30) extending to said tool (4).

2. Device according to claim 1, **characterized in that** the gear wheel (15) which is directly driven by the motor drive shaft (6) is mounted on an input shaft (9), which is supported by the stationary section (12) of the housing (13), with an intermediate shaft (8) having been mounted between the input shaft (9) and the motor drive shaft (6), said intermediate shaft being able to experience an extension and being coupled to both shafts (6, 7) by cardan joints (7).

3. Device according to claim 1, characterized in that the stationary section (12) of the housing (13) will substantially be located within the second section (14) thereof and has been provided with two bearings (20), the axes of which being in line and coinciding with the axis (21) of the pivot shaft of the pivotable part (2) and with the axes of two bearings (19) accommodated in the second housing section (14) and which bearings (19) serve for supporting the wheel shaft (18), the stationary housing section (12), at a distance from the axes (21) of said bearings (19, 20) and outside of the second housing section (14), having been pivotally connected to at least one arm (23), which in turn has been pivotally connected to a stationary part (1).

4. Device according to claim 1, characterized in that the wheel shaft (9) in the stationary housing section is supported in a bush (11) being part of the stationary housing section (12) and which projects outwardly through an elongated slot (24) in the wall of the second housing section (14) and has been connected to the arm (23) extending between the stationary housing section (12) and a stationary part (1), in which this wall (25) of the second housing section, provided with the slot (24), has a bent shape, the centre of curvature of which coinciding with the axis (21) of the pivot shaft of the pivotable part (1).

## Patentansprüche

1. Vorrichtung zum Antreiben eines Werkzeugs (4), das an einem schwenkbaren Teil angeordnet ist, wie etwa dem Ausleger (2) o. dgl. eines Baggerschiffs, wobei die genannte Vorrichtung die folgenden Merkmale aufweist: einen Verbrennungsmotcr (5) o. dgl., der am genannten Schiff ortsfest angeordnet ist; eine Abtriebswelle (30), die am schwenkbaren Teil (2) angebracht ist, um das genannte Werkzeug (4) anzutreiben, und die im wesentlichen parallel zur Längsachse des schwenkbaren Teils (2) verläuft; Kupplungsmittel, die Kegelzahnrad- oder Scheibenzahnradgetriebe aufweisen, die zwischen dem genannten Motor und der genannten Abtriebswelle angeordnet sind, wobei die Verlängerung der Achse der MotorAntriebswelle (6) die Schwenkachse (22) des schwenkbaren Teils (2) schneidet und rechtwinklig hierzu verläuft, dadurch gekennzeichnet, daß die Motorantriebswelle (6) mittels der Kegel- oder Scheibenzahnräder (15, 16, 17) eine Getriebewelle (26) antreibt, deren Achse (36) die Schwenkachse (22) des schwenkbaren Teils (2) schneidet und senkreicht hierzu verläuft, wobei die genannten Kegelzahnräder (15, 16, 17) in einem Gehäuse (13) aufgenommen sind, das aus mindestens zwei Abschnitten (12, 14) besteht, die bezüglich einander abgedichtet sind, nämlich einem ersten, ortsfesten Abschnitt (12) und einem zweiten Abschnitt (14), der sich gemeinsam mit dem schwenkbaren Teil (2) bewegen kann, die Welle (18) des Zahnrades (16), das in die Zahnräder (15, 17) eingreift, die auf der Motorantriebswelle (6) bzw. der Getriebewelle (26) angebracht sind, auf die Schwenkachse (22) des schwenkbaren Teils (2) ausgerichtet ist und im ortsfesten Abschnitt (12) des genannten Gehäuses (13) gelagert ist, das schwenkbare Teil (2) mittels seiner eigenen Schwenkpunkte (3) gelagert ist, die zum Gehäuse beabstandet sind, und die genannte Getriebewelle (26) im zweiten Abschnitt des genannten Gehäuses gelagert ist, um die Abtriebswelle (13) anzutreiben, die sich zum genannten Werkzeug (4) hin erstreckt.

2. Vorrichtung nach Anspruch 1, dadurch gekennzeichnet, daß das Zahnrad (15), das unmittelbar von der Motorantriebswelle (6) angetrieben ist, an einer Eingangswelle (9) angebracht ist, die im ortsfesten Abschnitt (12) des Gehäuses (13) gelagert ist, mit einer Zwischenwelle (8), die zwischen der Eingangswelle (9) und der Motorantriebswelle (6) angebracht ist, wobei die genannte Zwischenwelle imstande ist, eine Verlängerung zu erfahren, und an beide Wellen (6, 7) mittels Kardangelenken (7) angekoppelt ist.

3. Vorrichtung nach Anspruch 1, dadurch gekennzeichnet, daß der ortsfeste Abschnitt (12) des Gehäuses (13) im wesentlichen innerhalb seines zweiten Abschnitts (14) angeordnet ist und mit zwei Lagerungen (20) versehen ist, deren Achsen auf die Achse (21) der Schwenkachse des schwenkbaren Teils (2) ausgerichtet sind und mit dieser zusammenfallen, sowie mit den Achsen zweier Lagerungen (19), die im zweiten Gehäuseabschnitt (14) aufgenommen sind, welche Lagerungen (19) zum Lagern der Radwelle (18) dienen, wobei der ortsfeste Gehäuseabschnitt (12) mit Abstand zu den Achsen (21) der genannten Lagerungen (19, 20) und außerhalb des zweiten Gehäuseabschnitts (14) schwenkbar mit mindestens einem Arm (23) verbunden ist, welcher seinerseits schwenkbar mit einem ortsfesten Teil (1) verbunden ist.

4. Vorrichtung nach Anspruch 1, dadurch gekennzeichnet, daß die Radwelle (9) im ortsfesten Gehäuseabschnitt in einer Büchse (11) gelagert ist, die Teil des ortsfesten Gehäuseabschnitts (12) ist, nach außen durch einen länglichen Schlitz (24) in der Wand des zweiten Gehäuseabschnitts (14) heraussteht und mit dem Arm (23) verbunden ist, der sich zwischen dem ortsfesten Gehäuseabschnitt (12) und einem ortsfesten Teil (1) erstreckt, wobei diese Wand (25) des zweiten Gehäuseabschnitts, die mit dem Schlitz (24) versehen ist, eine gebogene Form hat, und deren Krümmungsmittelpunkt mit der Achse (21) der Schwenkachse des schwenkbaren Teils (1) zusammenfällt.

## Revendications

1. Dispositif pour entraîner un outil (4) disposé sur une partie pivotante, telle que, par exemple, l'élinde (2) ou l'analogue d'une drague montée sur un bateau, ledit dispositif comprenant : un moteur à combustion (5) ou l'analogue disposé, fixe, sur ledit bateau; un arbre de sortie (30) monté sur la partie pivotante (2) pour entraîner ledit outil (4) et s'étendant pratiquement parallèle à l'axe longitudinal de ladite partie pivotante (2); des moyens d'accouplement comprenant des transmissions par roues dentées coniques ou à denture plate disposées entre ledit moteur et ledit arbre de sortie, le prolongement de l'axe de l'arbre d'entraînement (6) du moteur coupant l'axe de pivotement (22) de la partie pivotante (2) et lui étant perpendiculaire, caractérisé en ce que, au moyen d'engrenages par roues dentées coniques ou à denture plate (15, 16, 17), l'arbre d'entraînement (6) du moteur entraîne un arbre de transmission (26) dont l'axe (36) coupe l'axe de pivotement (22) de la partie pivotante (2) et lui est perpendiculaire, lesdites roues dentées coniques (15, 16, 17) étant logées dans un carter (13) constitué d'au moins deux sections (12, 14) rendues hermétiques l'une par rapport à l'autre, à savoir une première section fixe (12) et une deuxième section (14) mobile avec la partie pivotante (2), l'arbre (18) de la roue dentée (16) engrenant avec les roues dentées (15, 17) montées respectivement sur l'arbre d'entraînement (6) du moteur et l'arbre de transmission (26) étant aligné avec l'axe de pivotement (22) de la partie pivotante (2) et étant supporté par la section fixe (12) dudit carter (13), la partie pivotante (2) étant supportée par ses propres points de pivotement (3) situés à distance du carter, ledit arbre de transmission (26) étant supporté par la deuxième section dudit carter (13) pour entraîner l'arbre de sortie (30) s'étendant jusqu'audit outil (4).

2. Dispositif selon la revendication 1, caractérisé en ce que la roue dentée (15), qui est directement entraînée par l'arbre d'entraînement (6) du moteur, est montée sur un arbre d'entrée (9), qui est supporté par la section fixe (12) du carter (13), un arbre intermédiaire (8) ayant été monté entre l'arbre d'entrée (9) et l'arbre d'entraînement (6) du moteur, ledit arbre intermédiaire pouvant s'allonger et étant couplé aux deux arbres (6, 9) par des joints à la Cardan (7).

3. Dispositif selon la revendication 1, caractérisé en ce que la section fixe (12) du carter (13) est pratiquement disposée à l'intérieur de la deuxième section (14) de celui-ci et présente deux paliers (20), dont les axes sont alignés et coïncident avec l'axe (21) de l'arbre de pivotement de la partie pivotante (2) et avec les axes de deux paliers (19) logés dans la deuxième section (14) du carter, lesquels paliers (19) servent à supporter l'arbre (18) de la roue dentée (16), la section de carter fixe (12) ayant été, à distance des axes (21) desdits paliers (19, 20) et à l'extérieur de la deuxième section de carter (14), raccordée à pivotement à au moins un bras (23), qui est à son tour raccordée à pivotement à une partie fixe (1).

4. Dispositif selon la revendication 1, caractérisé en ce que l'arbre de roue (9) dans la section de carter fixe est supporté dans un manchon (11) faisant partie de la section de carter fixe (12) et qui se projette vers l'extérieur à travers une fente allongée (24) dans la paroi de la deuxième section de carter (14) et est raccordé au bras (23) s'étendant entre la section de carter fixe (12) et une partie fixe (1), cette paroi (25) de la deuxième section de carter comportant la fente (24) ayant une forme incurvée dont le centre de courbure coïncide avec l'axe (21) de l'arbre de pivotement de la partie pivotante (2).
